# EUROPEAN PATENT SPECIFICATION

(11) **EP 3 954 187 B1**
(45) Date of publication and mention of the grant of the patent: **01.11.2023**
(21) Application number: 20787382.9
(22) Date of filing: 08.04.2020
(51) Int. Cl.: A01D 34/00, A01D 34/86, G05D 1/00, G05D 1/02

(54) **MOWER**
MÄHER
TONDEUSE

(30) Priority: 11.04.2019 JP 2019075713
(43) Date of publication of application: 16.02.2022
(73) Proprietor: KUBOTA CORPORATION, Osaka-shi, Osaka 556-8601 (JP)
(72) Inventor: KOBAYASHI, Takanori, Sakai-shi, Osaka 590-0823 (JP); MINAKATA, Yusuke, Sakai-shi, Osaka 590-0823 (JP); WATANABE, Sho, Sakai-shi, Osaka 590-0823 (JP)
(74) Representative: Müller-Boré & Partner Patentanwälte PartG mbB
(86) International application number: PCT/JP2020/015862
(87) International publication number: WO 2020/209305

(56) References cited:
- JP-A- 2007 053 974
- JP-A- 2007 053 974
- JP-A- 2008 017 735
- JP-A- 2016 189 051
- US-A1- 2014 013 721
- US-A1- 2014 137 526

## Description

### [TECHNICAL FIELD]

The present invention relates to a mower, for example, capable of mowing grass/lawn on a slope.

### [BACKGROUND ART]

A technique disclosed in Patent Document 1 is known as a mower. The mower disclosed in Patent Document 1 includes a machine body. The machine body is provided with wheels, a mowing device, a receiver, and the like. The mower is capable of mowing grass/lawn through control of the machine body with a remote controller transmitting a control signal to the receiver.

### [RELATED ART DOCUMENTS]

### [PATENT DOCUMENTS]

[Patent document 1] Japanese Unexamined Patent Application Publication No. 2019-17269

### [DISCLOSURE OF THE INVENTION]

### [PROBLEMS TO BE SOLVED BY THE INVENTION]

In the mower disclosed in Patent Document 1, for example, the mower can be placed on a slope (face of slope), and an operator can mow grass/lawn with the mower traveling on the slope through operation of the remote controller. It may be difficult to mow grass/lawn with the mower being controlled to travel on an inclining face of slope through remote control (manual control). The documents JP 2016 189051 A, US 2014/137526 A1, and JP 2007 053974 A show further known mowers.

In view of the above-mentioned problems, the present invention intends to provide a mower capable of easily mowing grass/lawn on a slope (face of slope).

### [MEANS OF SOLVING THE PROBLEMS]

The present invention employs following technical means for achieving the above configuration.

A mower includes a machine body, a traveling device provided on the machine body, a mowing device provided on the machine body, a posture detection device configured to detect at least a pitch angle of the machine body as a posture of the machine body, and a controller to control the traveling device so as to cause the machine body to travel along a reference line. The controller includes a first posture changing unit that controls the traveling device to change a direction of the machine body at least before the machine body is caused to travel along the reference line, a contour line calculation unit that calculates, when the machine body is positioned on a slope, a contour line on the slope based on a plurality of pitch angles each of which is detected by the posture detection device at each time when the direction of the machine body is changed by the first posture changing unit, a line setting unit that sets the contour line calculated by the contour line calculation unit as the reference line, and a second posture changing unit that changes the direction of the machine body so as to cause the machine body to travel along the reference line set by the line setting unit.

The first posture changing unit changes the direction of the machine body, the pitch angle of which is within a predetermined range, to either one of a mountain side and a valley side on the slope. The contour line calculation unit calculates the contour line based on the plurality of pitch angles each of which is detected at each time when the direction of a front portion of the machine body is changed to the mountain side or the valley side.

A pitch angle of the machine body when the front portion of the machine body is turned from a predetermined position in one mountain or valley side on the slope by the first posture changing unit is defined as a first pitch angle. A pitch angle of the machine body when the front portion of the machine body is turned to the other mountain or valley side opposite to the one mountain or valley side by the first posture changing unit is defined as a second pitch angle. The contour line calculation unit calculates the contour line based on the first pitch angle and the second pitch angle.

The first pitch angle is defined as the pitch angle when the front portion of the machine body is turned to the valley side relative to the predetermined position. The second pitch angle is defined as the pitch angle when the front portion of the machine body is turned to the mountain side relative to the predetermined position. A passage time for turning the front portion of the machine body from a position on the valley side corresponding to the first pitch angle to another position on the mountain side corresponding to the second pitch angle is defined as a first passage time. The contour line calculation unit stores the first passage time. A passage time for turning the front portion of the machine body from the position on the mountain side with the pitch angle corresponding to the second pitch angle to the valley side is defined as a second passage time. The contour line calculation unit calculates the contour line as a line coinciding to the direction of the machine body when the second passage time reaches substantially half of the stored first passage time.

The first posture changing unit changes the direction of the machine body in a place where mowing has been completed.

The contour line calculation unit corrects the contour line based on a pitch angle of the machine body caused to travel along the reference line by the second posture changing unit.

The mower further includes a positioning device configured to measure a position of the machine body. The second posture changing unit controls the traveling device so as to reduce a deviation of the position of the machine body measured by the positioning device from the reference line.

### [EFFECTS OF THE INVENTION]

According to the present invention, grass/lawn on a slope (face of slope) can be easily mowed.

### [BRIEF DESCRIPTION OF THE DRAWINGS]

FIG. 1 is a view showing a control system of a working machine.
FIG. 2 is a view showing various types of modes.
FIG. 3 is an explanation view explaining an assist control.
FIG. 4 is a view showing a flow of setting a contour line J1 and mowing on the contour line J1.
FIG. 5 is a view showing a flow of posture changing of a machine body in the first posture changing unit 31.
FIG. 6 is a view showing a state of posture changing of a mower (machine body).
FIG. 7 is a schematic plan view of the mower.

### [BEST MODE FOR CARRYING OUT THE INVENTION]

With appropriate reference to the drawings, an embodiment of the present invention will be described below.

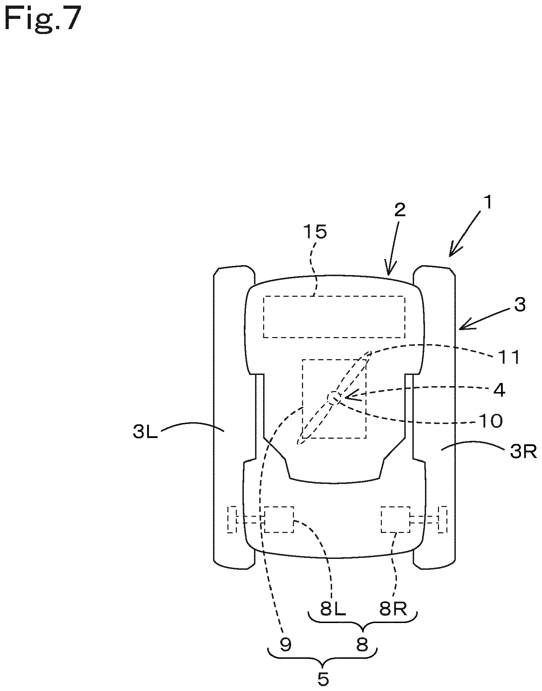

FIG. 7 shows a schematic view of a mower.

As shown in FIG. 7, the mower 1 is provided with a machine body 2, traveling devices 3, a mowing device 4, and a prime mover 5. The traveling devices 3 include a pair of crawler devices 3L and 3R disposed on left and right portions of the machine body 2, respectively.

The mowing device 4 is configured to be driven by a power of a prime mover 5, thereby mowing the grass/lawn. The mowing device 4 includes a rotation shaft 10 rotatably supported by the machine body 2 or the like, and cutting blades (cutters) 11 provided on the rotation shaft 10.

The prime mover 5 is a machine configured to generate the power, and is an electric motor to be driven by at least an electric power. The prime mover 5 may be a hybrid system having an electric motor and an internal combustion engine such as a gasoline engine or a diesel engine.

The prime mover 5 includes a first electric motor 8 that provides a power to the traveling device 3 and a second electric motor 9 that outputs a power to the mowing device 4. The first electric motor 8 includes a left motor 8L that outputs a power to the left crawler device 3L and a right motor 8R that outputs a power to the right crawler device 3R, thereby enabling the crawler device 3L and the crawler device 3R to be driven and rotated independently. The second electric motor 9 is drivingly connected to the rotation shaft 10 to rotate the rotation shaft 10.

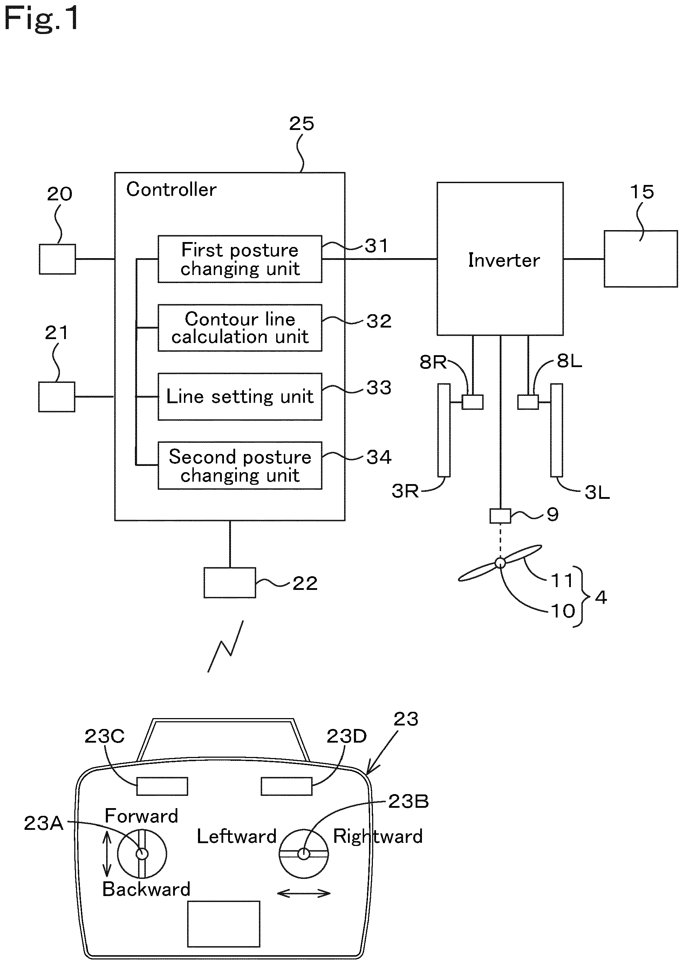

The mower 1 is provided with a battery 15 configured to supply electric power to the prime mover 5. The battery 15 supplies, via an inverter 16 (see FIG. 1), the electric power to the first electric motor 8 (left motor 8L and right motor 8R) and the second electric motor 9.

FIG. 1 shows a control system in the mower 1.

As shown in FIG. 1, the mower 1 is provided with a positioning device 20, a posture detection device 21, and a wireless transceiver (communication device) 22. The positioning device 20, the posture detection device 21, and the wireless transceiver 22 are provided on the machine body 2.

The positioning device 20 is configured to detect a position (positioning information including latitude and longitude) of the machine body (machine itself) with a satellite positioning system (including a positioning satellite) such as the GPS, the GLONASS, the HOKUTO, the Galileo, or MICHIBIKI. For example, the positioning device 20 receives a satellite signal (representing a position of the positioning satellite, a transmission time, correction information, and the like) transmitted from the positioning satellite, and detects a position (for example, latitude and longitude) based on the satellite signal.

The posture detection device 21 includes, for example, an inertial measurement unit (IMU). The inertial measurement unit is constituted of an acceleration sensor for detecting acceleration, a gyro sensor for detecting an angular velocity, and the like. The posture detection device 21, that is, the inertial measurement unit can detect a roll angle, a pitch angle, a yaw angle, and the like of the machine body 2.

The wireless transceiver 22 is capable of receiving signals from various external devices. In this embodiment, the external device is a remote control unit 23 configured to be operated remotely. The wireless transceiver 22 receives an operation signal and a control signal other than the operation signal, which are transmitted from the remote control unit 23 by radio. The remote control unit 23 includes a first operation lever 23A for instructing forward or backward traveling, and a second operation lever 23B for instructing left turn (left steering) or right turn (right steering).

When the forward or backward traveling is instructed by operating the first operation lever 23A, the remote control unit 23 outputs, as the operation signal, either a forward-traveling signal representing the forward traveling of the machine body 2 or a backward-traveling signal representing the backward traveling of the machine body 2, and the wireless transceiver 22 receives the forward-traveling or backward-traveling signal. In addition, when a left turn or right turn is instructed by operating the second operation lever 23B, the remote control unit 23 outputs, as the operation signal, either a left turn signal representing the left turn of the machine body 2 or a right turn signal representing the right turn of the machine body 2, and the wireless transceiver 22 receives the left turn signal or the right turn signal.

The remote control unit 23 has a mowing switch 23C and a mode switch 23D. The mowing switch 23C is an ON/OFF shift switch. When the mowing switch 23C is turned ON, the remote control unit 23 outputs, as the control signal, a mowing start signal instructing to start mowing. When the mowing switch 23C is turned OFF, the remote control unit 23 outputs, as the control signal, a mowing end signal instructing to end the mowing. The wireless transceiver 22 receives the mowing start signal or the mowing end signal.

The mode switch 23D is a switch configured to be shifted to select one of a manual operation mode (radio control mode), an assist mode, and a switchback mode. The remote control unit 23 outputs, as the control signal, a signal representing the radio control mode, the assist mode, or the switchback mode according to an operation of the mode switch 23D, and the wireless transceiver 22 receives the signal representing the selected mode (radio control mode, assist mode, or switchback mode).

The mower 1 is provided with a controller 25. The controller 25 performs various controls to be performed in the mower 1.

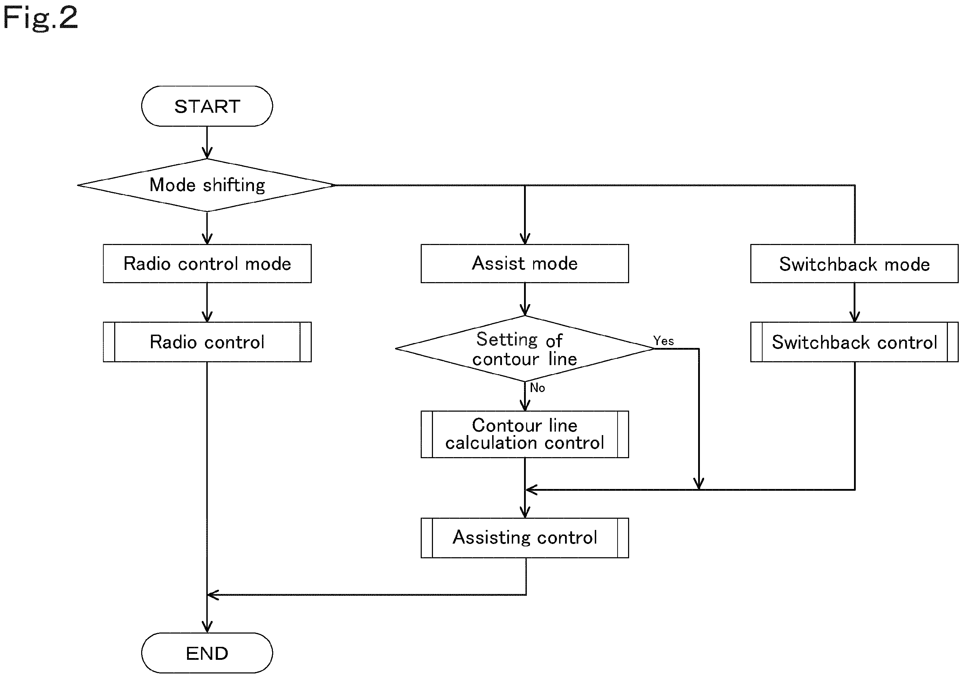

As shown in FIG. 2, when the wireless transceiver 22 receives the radio control mode, the controller 25 executes a radio control, and when the wireless transceiver 22 receives the assist mode, the controller 25 executes an assist control or the like. Moreover, when the wireless transceiver 22 receives the switchback mode, the controller 25 executes a switchback control.

In the radio control, the controller 25 controls the machine body 2 (traveling devices 3) according to the operation signal (forward-traveling signal, backward-traveling signal, left turn signal, right turn signal) transmitted from the remote control unit 23.

Specifically, when the wireless transceiver 22 receives a forward-traveling signal, the controller 25 moves the machine body 2 forward by normally rotating the left motor 8L and right motor 8R (normally rotating the crawler devices 3L and 3R). When the wireless transceiver 22 receives the backward-traveling signal, the controller 25 moves the machine body 2 backward by reversely rotating the left motor 8L and right motor 8R (reversely rotating the crawler devices 3L and 3R). In addition, when the wireless transceiver 22 receives the left turn signal, the controller 25 increases a rotation speed of the right motor 8R to be higher than that of the left motor 8L (increasing a rotation speed of the crawler device 3R to be higher than that of the crawler device 3L), thereby turning the machine body 2 to the left (left steering). In addition, when the wireless transceiver 22 receives the right turn signal, the controller 25 increases a rotation speed of the left motor 8L to be higher than that of the right motor 8R (increasing a rotation speed of the crawler device 3L to be higher than that of the crawler device 3R), thereby turning the machine body 2 to the right (right steering).

As shown in FIG. 2, in the assist mode, the controller 25 executes the assist control when a contour line J1 is set, and executes a contour line calculation control when the contour line J1 is not set.

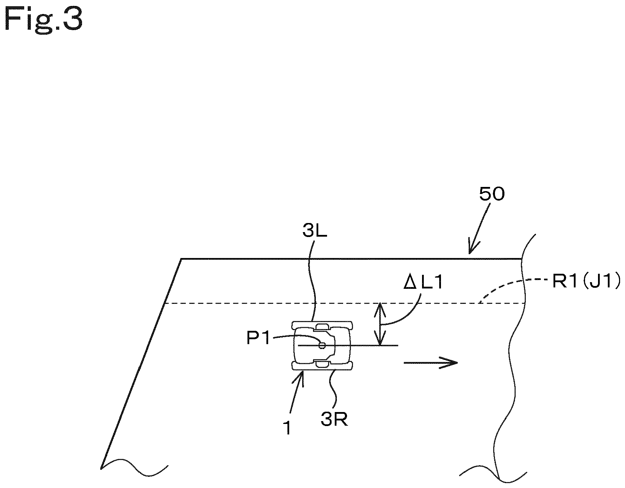

As shown in FIG. 3, in the assist control, the traveling device 3 is controlled so that the machine body 2 travels along a reference line R1. Specifically, when a position P1 of the machine body (machine position) P1 detected by the positioning device 20 is deviated from the reference line R1, the machine body 2 (traveling devices 3) is turned (steered) to the left or right in a direction to eliminate the deviation. That is, the controller 25 changes a traveling direction of the machine body 2 (traveling devices 3) so as to reduce a positional deviation ΔL1 of the machine position P1 from the reference line R1. In the assist mode control, the traveling direction of the machine body 2 (traveling devices 3) may be changed so that the traveling direction of the machine body 2 (traveling devices 3) matches a direction of the reference line R1.

The contour line calculation control obtains a contour line of a slope 50 by changing the traveling direction of the machine body 2 on the slope 50, as described below.

In the switchback control, when multiple reference lines R1 have been set, the controller 25 moves the machine body 2 from one reference line R1 on which the mowing (traveling) has been completed to another reference line R1 on which no mowing (traveling) has been done.

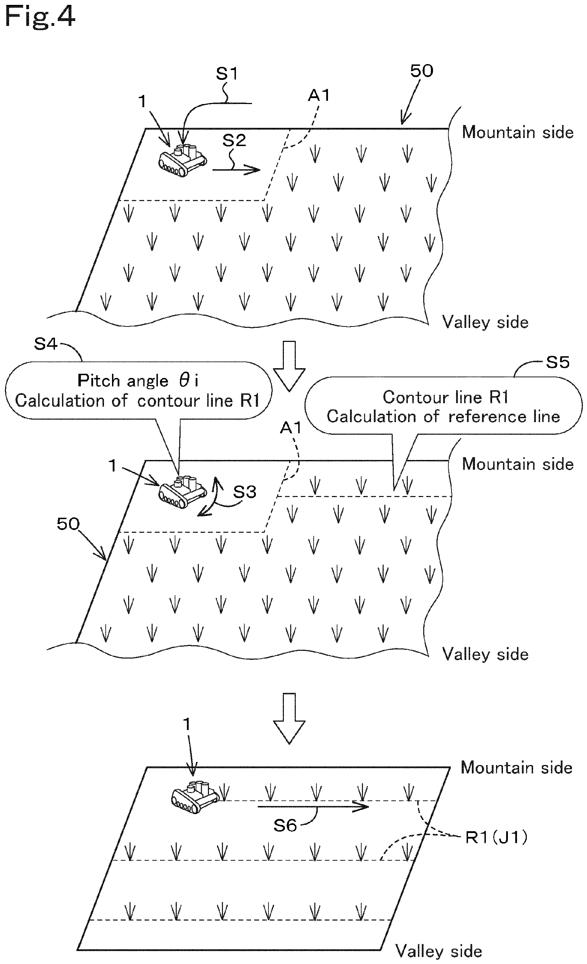

In mowing on the slope (face of slope) 50, the mower 1 can mow along the contour line J1. FIG. 4 shows a flow of setting the contour line J1 and mowing along the contour line J1.

As shown in FIG. 4, first, the controller 25 actuates the radio-controlled mode, and an operator operates the mower 1 so as to move the mower 1 to a mountain side (upward) on the slope 50 (step S1). After moving the mower 1 to the mountain side on the slope, an operator operates the mower 1 to mow the grass/lawn in an area on the slope 50 to form an area (mowed area) A1 in which the mowing has been completed (step S2). In the mowed area A1, a direction of a front portion of the mower 1 (machine body 2) is changed to either a valley side or the mountain side on the slope 50 (step S3: posture-changing operation). A plurality of pitch angles θ each of which is detected by the posture detection device 21 at each time when the posture-changing operation S3 is performed are used to calculate the contour line J1 (step S4: contour line calculation). The contour line J1 is set as the reference line R1 (step S5). The mowing is performed with the mower 1 traveling along the set reference line R1 (contour line J1) (step S6).

Next, the calculation of the contour line J1 will be explained in detail.

As shown in FIG. 1, the controller 25 is provided with a first posture changing unit 31 and a contour line calculation unit 32. The first posture changing unit 31 and the contour line calculation unit 32 are each constituted of an electrical and electronic component installed in the controller 25, a computer program stored in the controller 25, and/or the like.

The first posture changing unit 31 changes a traveling direction of the machine body 2 by controlling the traveling device 3, at least before the machine body 2 travels along the reference line R1, that is, when the machine body 2 is positioned in the mowed area A1. Specifically, the first posture changing unit 31 changes a posture of the machine body 2 by driving the left motor 8L and the right motor 8R.

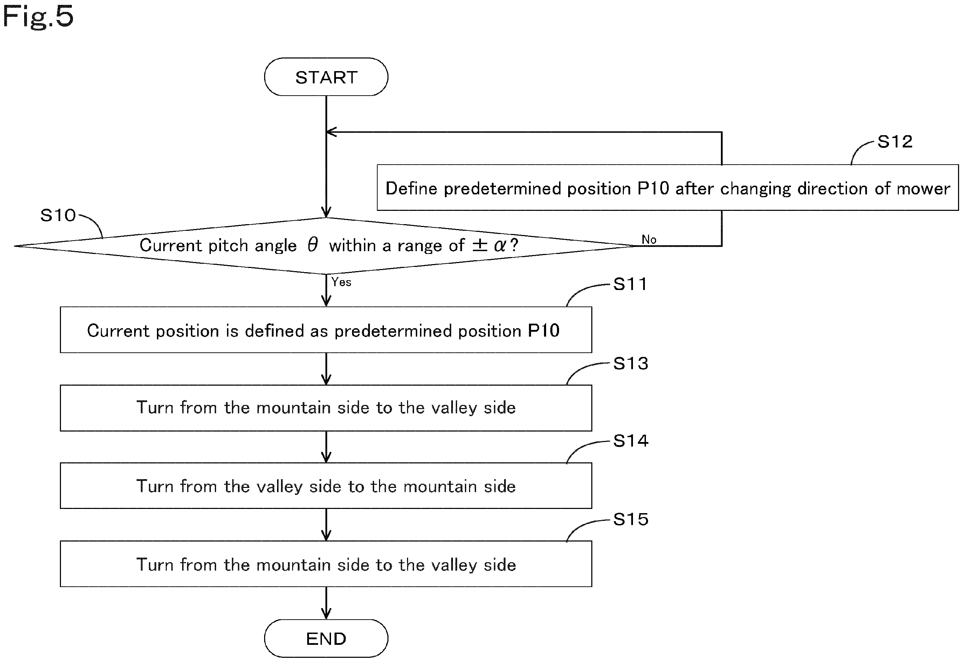

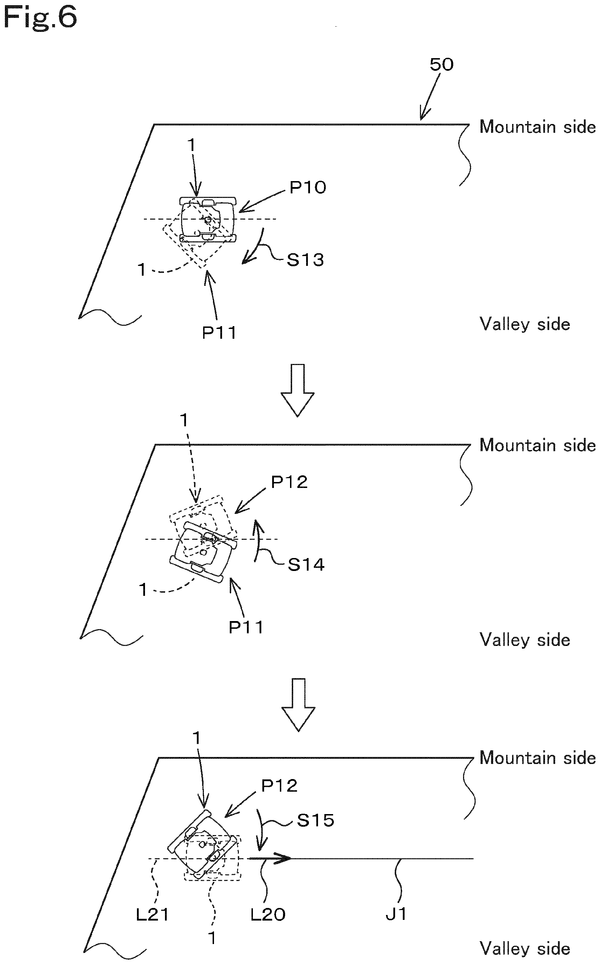

FIG. 5 shows a flow of posture changing of the machine body in the first posture changing unit 31, and FIG. 6 shows a state of the posture changing of the machine body.

As shown in FIG. 5, in a state where the mower 1 is placed in the mowed area A1, the first posture changing unit 31 refers to a currently detected pitch angle θ of the mower 1 (current pitch angle θ) and judges whether the referred-to current pitch angle θ is within a predetermined range (±α° (deg)) or not (step S10). When the current pitch angle θ is within ±α° (deg), the first posture changing unit 31 defines the current position of the mower 1 as a predetermined position P19 as shown in FIG. 6 (step S11). And, when the current pitch angle θ is not within ±α° (deg), the traveling direction of the mower 1 is changed, by driving either one of the crawler devices 3L or 3R, to define, as the predetermined position P10, another position at which the current pitch angle θ becomes within ±α° (deg) (step S12).

When the defining of the predetermined position P10 is completed, the first posture changing unit 31 turns the direction of the front portion of the mower 1 to the valley side on the slope 50 by driving the crawler devices 3L and 3R from a state where the mower 1 is stopped at the predetermined position P10 (step S13). The first posture changing unit 31 refers to the pitch angle θ during turning of the mower 1 on the valley side, and stops changing the traveling direction on the valley side at a valley side position (first position) P11 where the pitch angle θ reaches a preset first pitch angle θβ (first pitch angle θβ).

Then, the first posture changing unit 31 turns the direction of the front portion of the mower 1 from the valley side to the mountain side on the slope 50 by driving the crawler devices 3L and 3R from the state where the mower 1 is stopped at the valley side position (first position) P11 (step S14). When turning the mower 1 from the valley side to the mountain side, the first posture changing unit 31 refers to the pitch angle θ during turning of the mower 1 from the valley side to the mountain side, and stops changing the traveling direction on the mountain side at a mountain side position (second position) P12 where the pitch angle θ reaches a preset second pitch angle θγ (second pitch angle θγ). The second pitch angle θγ is a value obtained by doubling the first pitch angle θβ in absolute value terms (second pitch angle θγ = first pitch angle θβ × 2). In addition, in step S14, as described below, the contour line calculation unit 32 measures a passage time (first passage time) T1 for which the mower 1 is turned from the valley side position (first position) P11 to the mountain side position (second position) P12.

The first posture changing unit 31 drives the crawler devices 3L and 3R from a state where the mower 1 is stopped at the mountain side position (second position) P12, and thereby turning the front portion of the mower 1 to the valley side on the slope 50 again (step S15).

The first posture changing unit 31 turning the mower 1 from the mountain side to the valley side stops changing the traveling direction of the mower 1 when a predetermined time (second passage time) T2 has elapsed since the change of the traveling direction from the mountain side position (second position) P12 is started. The second passage time T2 is a substantially half of the first passage time T1 (the time involved in turning from the first position P11 to the second position P12). In the above-described step S13 to step S15, it is preferable to keep a ratio between the rotation speeds of the left motor 8L and the right motor 8R constant (uniform) when the first posture changing unit 31 changes the traveling direction of the machine body 2 to the mountain side and the valley side, that is, when the posture change is performed. In this regard, the first posture changing unit 31 makes the ratio between the rotation speeds of the left motor 8L and the right motor 8R in turning the mower 1 to the left the same as the ratio between the rotation speeds of the left motor 8L and the right motor 8R in turning the mower 1 to the right. In other words, the rotation speed of each of the left motor 8L and the right motor 8R in turning to the left is respectively the same as the rotation speed of each of the left motor 8L and the right motor 8R in turning to the right.

In this manner, the first posture changing unit 31 controls the front portion of the mower 1 to turn to the mountain side and the valley side before the machine body 2 is made travel along the reference line R1. In the above-mentioned embodiment, the first posture changing unit 31 turns the mower 1 from the predetermined position P10 toward the valley side, then toward the mountain side, and then from the mountain side toward the valley side. For example, not limited to this configuration, the mower may be turned from the predetermined position P10 toward the mountain side, then from the valley side toward the mountain side; accordingly, the procedure to the mountain side and the valley side is not limited to the above-mentioned procedure.

The contour line calculation unit 32 calculates the contour line J1 set when the machine body 2 is positioned on the slope 50 based on the plurality of pitch angles θ each of which is detected when the traveling operation of the machine body 2 is changed by the first posture changing unit 31, that is, when the direction of the front portion of the machine body 2 is changed to either the valley side or the mountain side on the slope 50.

Specifically, the contour line calculation unit 32 obtains the contour line J1 based on the first pitch angle (first pitch angle) θβ defined when the front portion of the machine body 2 is changed from the predetermined position P10 to either the valley side or the mountain side on the slope 50 by the first posture changing unit 31 and on the second pitch angle (second pitch angle) θγ detected when the front portion of the machine body 2 is changed to the opposite direction to the above direction by the first posture changing unit 31. As described above, in this embodiment, the first pitch angle θβ is an angle defined when the front portion of the machine body 2 is turned toward the valley side relative to the predetermined position P10, and the second pitch angle θγ is an angle defined when the front portion of the machine body is turned toward the mountain side relative to the predetermined position P10.

The contour line calculation unit 32 stores the first passage time T1 for which the machine body 1 reaches the mountain side position (second position P12) corresponding to the second pitch angle θγ from the valley side position (first position P11) corresponding to the first pitch angle θβ, and defines, as the contour line J1, a line L20 coinciding to the traveling direction of the machine body 2 obtained when the second passage time T2 reaches half of the first passage time T1, the second passage time T2 being defined as a time taken to change the direction of the front portion of the machine body 2 to the valley side again from the mountain side position (second position P12). That is, as shown in step S15 of FIG. 6, in the case where the direction of the front portion of the machine body 2 is changed to the valley side again from the mountain side position (second position P12), the contour line J1 is set as the line L20 on an extension of a machine body line L21 passing through the width-directional center of the machine body 2 when a passage time from start of changing the direction of the front portion of the machine body 2 reaches the second passage time T2 that is half of the first passage time T1.

As described above, due to the contour line calculation unit 32, the contour line J1 can be obtained based on the pitch angle θ detected when the direction of the machine body 2 is changed by the first posture changing unit 31.

The controller 25 includes a line setting unit 33 and a second posture changing unit 34. The line setting unit 33 and the second posture changing unit 34 are each constituted of an electrical and electronic component installed in the controller 25, a computer program stored in the controller 25, and/or the like.

The line setting unit 33 sets, as the reference line R1, the contour line J1 calculated by the contour line calculation unit 32. In addition, the line setting unit 33 sets a plurality of reference lines R1 on and along the slope 50. The second posture changing unit 34 changes a traveling direction of the machine body 2 so that the machine body travels along the reference line R1 set by the line setting unit 33. The second posture changing unit 34 causes the machine body 2 to travel along the reference line R1 by executing the assist mode control.

In the traveling by the second posture changing unit 34, the contour line calculation unit 32 may correct the contour line J1. For example, in the case where the front portion of the machine body 2 is turned from the mountain side position (second position P12) toward the valley side, the contour line calculation unit 32 stores the pitch angle θ defined when the passage time from start of changing the direction of the front portion of the machine body 2 reaches the second passage time T2, which is a substantially half of the first passage time T1, that is, the pitch angle θ (contour pitch angle θ) at which the contour line J1 has been set. When the pitch angle θ (traveling pitch angle θ) of the machine body 2 during the traveling becomes larger than a predetermined threshold, the contour line calculation unit 32 determines that the contour line J1 needs to be corrected. The contour line calculation unit 32 corrects a direction of contour line J1 toward the mountain side when the traveling pitch angle θ is on the minus side relative to the contour pitch angle θ, and corrects the direction of contour line J1 toward the valley side when the traveling pitch angle θ is on the plus side relative to the contour pitch angle θ.

The mower 1 includes the machine body 2, the traveling device 3, the mowing device 4, the posture detection device 21 configured to detect at least a pitch angle of the machine body 2 as a posture of the machine body 2, and the controller 25 to control the traveling device 3 so as to cause the machine body 2 to travel along the reference line R1. The controller 25 includes the first posture changing unit 31 that controls the traveling device 3 to change a direction of the machine body 2 at least before the machine body 2 is caused to travel along the reference line R1, the contour line calculation unit 32 that calculates, when the machine body 2 is positioned on the slope 50, the contour line J1 on the slope 50 based on a plurality of pitch angles θ each of which is detected by the posture detection device 23 at each time when the direction of the machine body 2 is changed by the first posture changing unit 31, the line setting unit 33 that sets the contour line J1 calculated by the contour line calculation unit 32 as the reference line R1, and the second posture changing unit 34 that changes the direction of the machine body 2 so as to cause the machine body 2 to travel along the reference line R1 set by the line setting unit 33. According to this configuration, for example, when mowing has to be performed along the slope (face of slope) 50, after obtaining the reference line R1 corresponding to the contour line, the mowing can be easily performed along the contour line.

The first posture changing unit 31 changes the direction of the machine body 2, the pitch angle θ of which is within a predetermined range, to either one of the mountain side and the valley side on the slope 50. The contour line calculation unit 32 calculates the contour line J1 based on the plurality of pitch angles θ each of which is detected at each time when the direction of a front portion of the machine body 2 is changed to the mountain side or the valley side. According to this configuration, the contour line J1 can be easily obtained based on the plurality of pitch angles θ each of which is detected each of which is detected at each time when the direction of the machine body 2 is changed to the mountain side or the valley side.

The pitch angle θ of the machine body 2 when the front portion of the machine body 2 is turned from the predetermined position to one mountain or valley side on the slope 50 by the first posture changing unit 31 is defined as the first pitch angle θ. The pitch angle θ of the machine body 2 when the front portion of the machine body 2 is turned to the other mountain or valley side opposite to the one mountain or valley side by the first posture changing unit 31 is defined as the second pitch angle. The contour line calculation unit 32 calculates the contour line J1 based on the first pitch angle θ and the second pitch angle θ. For example, the first pitch angle θ when turning of the machine body 2 to the valley side is different from the second pitch angle when turning of the machine body 2 to the mountain side so that the contour line J1 can be easily obtained from both the first pitch angle θ and the second pitch angle θ.

The first pitch angle θ is defined as the pitch angle when the front portion of the machine body 2 is turned to the valley side relative to the predetermined position. The second pitch angle θ is defined as the pitch angle when the front portion of the machine body 2 is turned to the mountain side relative to the predetermined position, a passage time for turning the front portion of the machine body 2 from a position on the valley side corresponding to the first pitch angle θ to another position on the mountain side corresponding to the second pitch angle θ is defined as a first passage time. The contour line calculation unit 32 stores the first passage time. A passage time for turning the front portion of the machine body 2 from the position on the mountain side corresponding to the second pitch angle θ to the valley side is defined as a second passage time. The contour line calculation unit 32 calculates the contour line J1 as a line coinciding to the direction of the machine body 2 when the second passage time reaches substantially half of the stored first passage time. For example, in a case where it is assumed that the contour line J1 is a position at which the pitch angle θ of the machine body 2 is zero, it is possible to figure out a position of the contour line J1 by obtaining the position at which the pitch angle θ of the machine body 2 is zero. However, since the position at which the pitch angle θ is zero may not coincide with the contour line J1, the contour line J1 can be obtained relatively accurately by preliminarily measuring the first passage time taken to make the pitch angle reach the second pitch angle θ when the machine body 2 is turned from the valley side to the mountain side, and then by using the position obtained when the second passage time for turning the machine body 2 from the mountain side to the valley side becomes substantially half of the first passage time.

The first posture changing unit 31 changes the direction of the machine body 2 in a place where mowing has been completed. According to this configuration, it becomes easy to change the direction of the machine body 2 and to obtain the contour line J1 accurately.

The contour line calculation unit 32 corrects the contour line J1 based on the pitch angle θ of the machine body 2 caused to travel along the reference line R1 by the second posture changing unit 34. According to this configuration, since the contour line J1 is corrected, the grass/lawn can be mowed relatively along the slope 50 even when the initially obtained contour line J1 includes an error.

The mower 1 further includes the positioning device 20 configured to measure a position of the machine body 2. The second posture changing unit 34 controls the traveling device 3 so as to reduce a deviation of the position of the machine body 2 measured by the positioning device 20 from the reference line R1. According to this configuration, it is possible to easily mow the grass/lawn while moving the machine body 2 along the reference line R1.

In the above-mentioned embodiment, the contour line J1 is obtained based on the time for which the direction of the machine body 2 is turned to the valley side and the mountain side; however, the contour line J1 may be obtained by averaging the positions defined when the pitch angle θ becomes a predetermined angle, for example, zero degree, the positions being provided when the direction of the machine body 2 is turned to the valley side and the mountain side more than once.

In the above description, the embodiment of the present invention has been explained. However, all the features of the embodiment disclosed in this application should be considered just as examples, and the embodiment does not restrict the present invention accordingly. A scope of the present invention is shown not in the above-described embodiment but in the claims, and is intended to include all modifications within the scope of the claims.

### [DESCRIPTION OF THE REFERENCE NUMERAL]

- 1: Mower
- 2: Machine body
- 3: Traveling device
- 4: Mowing device
- 5: Prime mover
- 8: First electric motor
- 9: Second electric motor
- 10: Rotation shaft
- 20: Positioning device
- 21: Posture detection device
- 22: Wireless transceiver
- 23: Remote control device
- 25: Controller
- 31: First posture changing unit
- 32: Contour-line calculation unit
- 33: Line setting unit
- 34: Second posture changing unit
- 50: Slope (Face of slope)
- J1: Contour line
- R1: Reference line
- R1a: Reference line
- R1b: Reference line
- T1: First passage time
- T2: Second passage time
- ΔL1: Positional deviation

## Claims

1. A mower (1) comprising:
a machine body (2);
a traveling device (3) provided on the machine body;
a mowing device (4) provided on the machine body;
a posture detection device (21) device configured to detect at least a pitch angle of the machine body as a posture of the machine body; and
a controller (25) configured to control the traveling device so as to cause the machine body to travel along a reference line, wherein the controller includes
a first posture changing unit (31) configured to control the traveling device to change a direction of the machine body at least before the machine body is caused to travel along the reference line, **characterized in that** the mower further comprises:
a contour line calculation unit (32) configured to calculate, when the machine body is positioned on a slope, a contour line on the slope based on a plurality of pitch angles each of which is detected by the posture detection device at each time when the direction of the machine body is changed by the first posture changing unit,
a line setting unit (33) configured to set the contour line calculated by the contour line calculation unit as the reference line, and
a second posture changing unit (34) configured to change the direction of the machine body so as to cause the machine body to travel along the reference line set by the line setting unit.

2. The mower according to claim 1, wherein
the first posture changing unit (31) is configured to change the direction of the machine body, the pitch angle of which is within a predetermined range, to either one of a mountain side and a valley side on the slope, and
the contour line calculation unit (32) is configured to calculate the contour line based on the plurality of pitch angles each of which is detected at each time when the direction of a front portion of the machine body is changed to the mountain side or the valley side.

3. The mower according to claim 2, wherein
a pitch angle of the machine body when the front portion of the machine body is turned from a predetermined position to one mountain or valley side on the slope by the first posture changing unit is defined as a first pitch angle,
a pitch angle of the machine body when the front portion of the machine body is turned to the other mountain or valley side opposite to the one mountain or valley side by the first posture changing unit is defined as a second pitch angle, and
the contour line calculation unit (32) is configured to calculate the contour line based on the first pitch angle and the second pitch angle.

4. The mower according to claim 3, wherein
the first pitch angle is defined as the pitch angle when the front portion of the machine body is turned to the valley side relative to the predetermined position,
the second pitch angle is defined as the pitch angle when the front portion of the machine body is turned to the mountain side relative to the predetermined position,
a passage time for turning the front portion of the machine body from a position on the valley side corresponding to the first pitch angle to another position on the mountain side corresponding to the second pitch angle is defined as a first passage time,
the contour line calculation unit (32) is configured to store
the first passage time,
a passage time for turning the front portion of the machine body from the position on the mountain side corresponding to the second pitch angle to the valley side is defined as a second passage time, and
the contour line calculation unit (32) is configured to calculate the contour line as a line coinciding to the direction of the machine body when the second passage time reaches substantially half of the stored first passage time.

5. The mower according to any one of claims 1 to 4, wherein
the first posture changing unit (31) is configured to change the direction of the machine body in a place where mowing has been completed.

6. The mower according to any one of claims 1 to 5, wherein
the contour line calculation unit (32) is configured to correct the contour line based on a pitch angle of the machine body caused to travel along the reference line by the second posture changing unit.

7. The mower according to any one of claims 1 to 6, further comprising:
a positioning device (20) configured to measure a position of the machine body, wherein
the second posture changing unit (34) is configured to control the traveling device so as to reduce a deviation of the position of the machine body measured by the positioning device from the reference line.

## Patentansprüche

1. Mähmaschine (1), aufweisend:
einen Maschinenkörper (2);
eine Fahrvorrichtung (3), die an dem Maschinenkörper vorgesehen ist;
eine Mähvorrichtung (4), die an dem Maschinenkörper vorgesehen ist;
eine Lageerkennungsvorrichtung (21), die zum Erfassen wenigstens eines Neigungswinkels des Maschinenkörpers als eine Lage des Maschinenkörpers konfiguriert ist; und
eine Steuereinheit (25), die zum Steuern der Fahrvorrichtung konfiguriert ist, um den Maschinenkörper zum Fahren entlang einer Bezugslinie zu veranlassen, wobei die Steuereinheit aufweist:
eine erste Lageänderungseinheit (31), die zum Steuern der Fahrvorrichtung konfiguriert ist, so dass sie eine Richtung des Maschinenkörpers ändert, zumindest bevor der Maschinenkörper zum Fahren entlang der Bezugslinie veranlasst wird, **dadurch gekennzeichnet, dass** die Mähmaschine ferner aufweist:
eine Konturlinienberechnungseinheit (32), die, wenn der Maschinenkörper auf einer Schräge positioniert ist, zum Berechnen einer Konturlinie auf der Schräge auf Basis einer Vielzahl von Neigungswinkeln konfiguriert ist, die durch die Lageerkennungsvorrichtung jeweils bei jeder Änderung der Richtung des Maschinenkörpers durch die erste Lageänderungseinheit erfasst werden,
eine Linieneinstellungseinheit (33), welche die von der Konturlinienberechnungseinheit berechnete Konturlinie als die Bezugslinie einstellt, und
eine zweite Lageänderungseinheit (34), die zum Ändern der Richtung des Maschinenkörpers, um den Maschinenkörper zum Fahren entlang der durch die Linieneinstellungseinheit eingestellten Bezugslinie zu veranlassen, konfiguriert ist.

2. Mähmaschine nach Anspruch 1, wobei
die erste Lageänderungseinheit (31) zum Ändern der Richtung des Maschinenkörpers, dessen Neigungswinkel innerhalb eines vorbestimmten Bereichs liegt, zu einer von einer Bergseite oder einer Talseite der Schräge hin konfiguriert ist, und
die Konturlinienberechnungseinheit (32) zum Berechnen der Konturlinie auf Basis der Vielzahl von Neigungswinkeln konfiguriert ist, die jeweils bei jeder Änderung der Richtung eines vorderen Teils des Maschinenkörpers zur Bergseite oder zur Talseite hin erfasst werden.

3. Mähmaschine nach Anspruch 2, wobei
ein Neigungswinkel des Maschinenkörpers, wenn der vordere Teil des Maschinenkörpers durch die erste Lageänderungseinheit von einer vorbestimmten Position zu einer Berg- oder Talseite hin auf der Schräge geändert wird, als ein erster Neigungswinkel definiert wird,
ein Neigungswinkel des Maschinenkörpers, wenn der vordere Teil des Maschinenkörpers durch die erste Lageänderungseinheit zu der anderen von der Berg- oder Talseite, die der einen von der Berg- oder Teilseite entgegengesetzt ist, hin gedreht wird, als ein zweiter Neigungswinkel definiert wird und
die Konturlinienberechnungseinheit (32) zum Berechnen der Konturlinie auf Basis des ersten Neigungswinkels und des zweiten Neigungswinkels konfiguriert ist.

4. Mähmaschine nach Anspruch 3, wobei
der erste Neigungswinkel als der Neigungswinkel bei Drehen des vorderen Teils des Maschinenkörpers zur Talseite relativ zur vorbestimmten Position hin definiert wird,
der zweite Neigungswinkel als der Neigungswinkel bei Drehen des vorderen Teils des Maschinenkörpers zur Bergseite relativ zur vorbestimmten Position hin definiert wird,
eine Durchfahrtszeit zum Drehen des vorderen Teils des Maschinenkörpers von einer Position auf der Talseite, die dem ersten Neigungswinkel entspricht, zu einer anderen Position auf der Bergseite, die dem zweiten Neigungswinkel entspricht, als eine erste Durchfahrtszeit definiert ist,
die Konturlinienberechnungseinheit (32) zum Speichern der ersten Durchfahrtszeit konfiguriert ist,
eine Durchfahrtszeit zum Drehen des vorderen Teils des Maschinenkörpers von der Position auf der Bergseite, die dem zweiten Neigungswinkel entspricht, zur Talseite hin als eine zweite Durchfahrtszeit konfiguriert ist, und
die Konturlinienberechnungseinheit (32) zum Berechnen der Konturlinie als eine Linie, die mit der Richtung des Maschinenkörpers zusammenfällt, wenn die zweite Durchfahrtszeit im Wesentlichen die Hälfte der gespeicherten ersten Durchfahrtszeit erreicht, konfiguriert ist.

5. Mähmaschine nach einem der Ansprüche 1 bis 4, wobei
die erste Lageänderungseinheit (31) zum Ändern der Richtung des Maschinenkörpers an einem Ort, an dem das Mähen abgeschlossen ist, konfiguriert ist.

6. Mähmaschine nach einem der Ansprüche 1 bis 5, wobei
die Konturlinienberechnungseinheit (32) zum Korrigieren der Konturlinie auf Basis eines Neigungswinkels des Maschinenkörpers, der durch die zweite Lageänderungseinheit zum Fahren entlang einer Bezugslinie veranlasst wird, konfiguriert ist.

7. Mähmaschine nach einem der Ansprüche 1 bis 6, ferner aufweisend:
eine Positionsbestimmungsvorrichtung (20), die zum Messen einer Position des Maschinenkörpers konfiguriert ist, wobei
die zweite Lageänderungseinheit (34) zum Steuern der Fahrvorrichtung, um eine Abweichung der durch die Positionsbestimmungsvorrichtung gemessenen Position des Maschinenkörpers von der Bezugslinie zu verringern, konfiguriert ist.

## Revendications

1. Tondeuse (1) comprenant :
un corps de machine (2) ;
un dispositif de déplacement (3) disposé sur le corps de machine ;
un dispositif de tonte (4) disposé sur le corps de machine ;
un dispositif (21) de détection de posture conçu pour détecter au moins un angle d'inclinaison du corps de machine en tant que posture du corps de machine ; et
un dispositif de commande (25) conçu pour commander le dispositif de déplacement afin d'amener le corps de machine à se déplacer le long d'une ligne de référence, le dispositif de commande comprenant
une première unité (31) de changement de posture conçue pour amener le dispositif de déplacement à changer une direction du corps de machine au moins avant que le corps de machine soit amené à se déplacer le long de la ligne de référence, **caractérisée en ce que** la tondeuse comprend en outre :
une unité (32) de calcul de ligne de contour conçue pour calculer, lorsque le corps de machine est positionné sur une pente, une ligne de contour sur la pente en fonction d'une pluralité d'angles d'inclinaison, dont chacun est détecté par le dispositif de détection de posture à chaque fois que la direction du corps de machine est changée par la première unité de changement de posture,
une unité (33) de définition de ligne conçue pour définir la ligne de contour calculée par l'unité de calcul de ligne de contour en tant que ligne de référence, et
une seconde unité (34) de changement de posture conçue pour changer la direction du corps de machine afin d'amener le corps de machine à se déplacer le long de la ligne de référence définie par l'unité de définition de ligne.

2. La tondeuse selon la revendication 1, dans laquelle
la première unité (31) de changement de posture est conçue pour changer la direction du corps de machine, dont l'angle d'inclinaison est compris dans une plage prédéfinie, à l'un ou l'autre d'un côté montagne et un côté vallée sur la pente, et
l'unité (32) de calcul de ligne de contour est conçue pour calculer la ligne de contour en fonction de la pluralité d'angles d'inclinaison, dont chacun est détecté à chaque fois que la direction d'une partie avant du corps de machine est changée vers le côté montagne ou vers le côté vallée.

3. La tondeuse selon la revendication 2, dans laquelle
un angle d'inclinaison du corps de machine, lorsque la partie avant du corps de machine est tournée d'une position prédéfinie vers un côté montagne ou vallée sur la pente par la première unité de changement de posture, est défini comme un premier angle d'inclinaison,
un angle d'inclinaison du corps de machine, lorsque la partie avant du corps de machine est tournée vers l'autre côté montagne ou vallée opposé audit côté montagne ou vallée par la première unité de changement de posture, est défini comme un second angle d'inclinaison, et
l'unité (32) de calcul de ligne de contour est conçue pour calculer la ligne de contour en fonction du premier angle d'inclinaison et du second angle d'inclinaison.

4. La tondeuse selon la revendication 3, dans laquelle
le premier angle d'inclinaison est défini comme l'angle d'inclinaison lorsque la partie avant du corps de machine est tournée vers le côté vallée par rapport à la position prédéfinie,
le second angle d'inclinaison est défini comme l'angle d'inclinaison lorsque la partie avant du corps de machine est tournée vers le côté montagne par rapport à la position prédéfinie,
une durée de passage, permettant de tourner la partie avant du corps de machine d'une position sur le côté vallée correspondant au premier angle d'inclinaison vers une autre position sur le côté montagne correspondant au second angle d'inclinaison, est définie comme une première durée de passage,
l'unité (32) de calcul de ligne de contour est conçue pour stocker la première durée de passage,
une durée de passage, permettant de tourner la partie avant du corps de machine de la position sur le côté montagne correspondant au second angle d'inclinaison vers le côté vallée, est définie comme une seconde durée de passage, et
l'unité (32) de calcul de ligne de contour est conçue pour calculer la ligne de contour en tant que ligne coïncidant avec la direction du corps de machine lorsque la seconde durée de passage atteint sensiblement la moitié de la première durée de passage stockée.

5. La tondeuse selon l'une quelconque des revendications 1 à 4, dans laquelle
la première unité (31) de changement de posture est conçue pour changer la direction du corps de machine dans un emplacement où la tonte a été achevée.

6. La tondeuse selon l'une quelconque des revendications 1 à 5, dans laquelle
l'unité (32) de calcul de ligne de contour est conçue pour corriger la ligne de contour en fonction d'un angle d'inclinaison du corps de machine amené à se déplacer le long de la ligne de référence par la seconde unité de changement de posture.

7. La tondeuse selon l'une quelconque des revendications 1 à 6, comprenant en outre :
un dispositif de positionnement (20) conçu pour mesurer une position du corps de machine,
la seconde unité (34) de changement de posture étant conçue pour commander le dispositif de déplacement afin de réduire un écart de la position du corps de machine, mesurée par le dispositif de positionnement, par rapport à la ligne de référence.
